# EUROPEAN PATENT APPLICATION

(11) **EP 4 317 349 A1**
(43) Date of publication of application: **07.02.2024**
(21) Application number: 22189066.8
(22) Date of filing: 05.08.2022
(51) Int. Cl.: C09J 153/02

(54) **HOT MELT ADHESIVE COMPOSITION FOR SECURED PAPER PACKAGING**

(71) Applicant: Henkel AG & Co. KGaA, 40589 Düsseldorf (DE)
(72) Inventor: Kong, Wei, 40591 Düsseldorf (DE); Sansottera, Enrico, 24040 Pontirolor Nuovo (IT); Gerlich, Laurenz, 42111 Wuppertal (DE); Klingberg, Wolfgang, 41352 Korschenbroich (DE); Swain, Andrew, 40885 Ratingen (DE)

(57) **Abstract**

The present invention relates to a hot melt adhesive composition for secured paper packaging which comprises a plasticizer blend, the use of said hot melt adhesive composition in secure paper packaging as well as an article produced with the inventive hot melt adhesive composition.

## Description

The present invention relates to a hot melt adhesive composition for secured paper packaging which comprises a plasticizer blend, the use of said hot melt adhesive composition in secure paper packaging as well as an article produced with the inventive hot melt adhesive composition.

Packaging waste is a major part of the total global waste. Development and promotion of sustainable alternatives to reduce the amount of packaging waste is therefore one of the challenges of today's industry, especially in light of increased e-commerce. Paper has emerged as an eco-friendly and sustainable alternative for plastic. There is therefore a high demand for paper packaging and respective materials to assist in the production of suitable packaging products.

Hot melt adhesives were found to be suitable adhesives in the production of paper packaging due to their solvent-free nature, fast forming bonding and cost effectiveness.

US 5747573 discloses a high heat resistant hot melt adhesive composition comprising a) about 20-80 parts by weight of the adhesive of an amorphous polyalphaolefin butene-propylene-ethylene-terpolymer, b) about 5-40 parts by weight of the adhesive of a solid benzoate plasticizer, and c) about 10-70 party by weight of the adhesive of a tackifier, wherein said adhesive composition has an elevated peel value of greater than 70 °C (160 °F).

US 5627229 refers to a hot melt adhesive composition comprising 5 to 40 wt.-% of a cyclohexane dimethanol dibenzoate plasticizer, 20 to 80 wt.-% of a tackifier selected from the group consisting of an aromatic tackifying resin, aromatic-aliphatic tackifying resin, aliphatic tackifying resin, rosin derived tackifying resin and mixtures thereof, and 5 to 35 wt.-% of a thermoplastic polymer wherein the composition, after application, cold flows for a controllable period of time at ambient temperature prior to subsequently increasing in modulus. The hot melt adhesive composition can, for example, be used to secure cigarette cartons, an assembly of cartons or in the production of disposable articles.

US 5853864 describes an article resistant to moisture-induced debonding comprising a substrate joined with a second layer by a sprayed-on adhesive comprising a) 10-40 parts by weight of a thermoplastic block copolymer selected from the group consisting of an A-B-A block copolymer, an A-(B-A)ₙ-B-A block copolymer, wherein n is an integer of 1 or more, and a radial block copolymer, each A comprising a polystyrene block and each B comprising a rubbery block; b) 30 to 75 part by weight of a tackifying resin selected from the group consisting of rosin derived tackifying resin, aliphatic tackifying resin, mixed aromatic-aliphatic tackifying resin and mixtures thereof; and c) 5 to 40 party by weight of cyclohexane dimethanol dibenzoate plasticizer, wherein, after the adhesive is sprayed on and cooled to ambient temperature, the adhesive retains sufficient liquidity for a sufficient time to wet or to penetrate the substrate or the second layer to form a moisture-resistant bond.

US 6034159 discloses a hot melt adhesive for multipurpose bookbinding comprising: a) from about 25% to about 40% by weight of a styrene-isoprene-styrene block copolymer having a styrene content between about 15% and about 35% by weight; b) from about 25% to about 50% by weight of at least one compatible tackifying resin selected from the group consisting of rosins and rosin ester; terpenes and modified terpenes; aliphatic, cycloaliphatic and aromatic hydrocarbons; hydrogenated derivatives and mixtures thereof; c) from about 10% to about 30% by weight synthetic high melting point wax, said high melt point wax having a melting point of greater than about 90 °C; d) from about 5% to about 30% by weight of a solid benzoate plasticizer; e) up to about 25% of a compatible wax selected from the group consisting of paraffin wax, microcrystalline wax and mixtures thereof; and f) up to about 15% of a compatible polymer selected from the group consisting of homopolymers, copolymers and terpolymers of ethylene; homopolymers, copolymers and terpolymers of propylene; rubbery block copolymers and mixtures thereof.

US 5026756 discloses a solid non-aqueous hot melt adhesive composition comprising a polymer, a tackifier, and a plasticizing amount in the range of about 5-40% by weight of 1,4-cyclohexane dimethanol dibenzoate.

US5624986 relates to a hot melt adhesive composition comprising: (a) about 5 to 50 wt-% of a plasticizer comprising a cycloaliphatic or aromatic ester of a benzene dicarboxylic acid or a cycloaliphatic polyester of aromatic carboxylic acids, which is a solid at room temperature; (b) about 20 to 80 wt-% of a tackifier selected from the group consisting of an aromatic tackifying resin, aromatic-aliphatic tackifying resin, aliphatic tackifying resin and a rosin derived tackifying resin, and mixtures thereof; and (c) about 0 to 55 wt-% of a thermoplastic polymer; wherein the composition, after application and cooling, cold flows for a controllable period of time at ambient temperature prior to subsequently increasing in modulus (G').

However, it was found that currently existing hot melt technology and products could not meet the demand for recently developed e-commerce paper packaging applications either due to poor bonding to dense papers or lack of heat resistance and security of bonding within the typical use window of temperatures of -20 to 50 °C. Although high performance hot melt adhesives show good bonding performance to paper, the bonding act cannot be secured. Rather, the paper packaging can be opened and resealed which is not desirable in secured paper packaging.

There is thus still the need for adhesive compositions which allow the production of secured paper packaging and which can preferably be employed in fast automated packaging lines.

It was surprisingly found that this need can be addressed by a hot melt adhesive composition comprising a plasticizer blend.

A first object of the present invention is therefore a hot melt adhesive composition comprising, based on the total weight of the composition:
a) 10 to 60 wt.-% of a thermoplastic block copolymer,
b) 30 to 70 wt.-% of a tackifier; and
c) 2 to 40 wt.-% of a plasticizer blend,
characterized in that the plasticizer blend comprises a solid plasticizer P1 and a liquid plasticizer P2.

The inventive hot melt adhesive composition surprisingly showed the desired combination of long open time and secured bonding. After bonding, the inventive adhesive composition was observed to become hard and rigid to generate excellent cohesion and heat resistance, resulting destructive paper tearing of the packaging when opened. This combination of properties was found to make the inventive hot melt adhesive suitable for use in automated packaging lines while at the same meeting the requirements for secure paper packaging.

Solid plasticizer within the content of the present invention refers to a plasticizer which is solid at room temperature, preferably having a melting point of more than 25 °C. Liquid plasticizer within the content of the present invention refers to a plasticizer which is liquid at room temperature. The melting point may be determined by DSC (differential scanning calorimetry). Room temperature within the content of the present invention refers to a temperature range of 20 to 23 °C.

Within the course of the present invention hot melt adhesive composition, adhesive composition, inventive composition and composition will be used synonymously if not otherwise stated.

The inventive hot melt composition comprises a thermoplastic copolymer, a tackifier and a plasticizer blend. Each of the components will be described in more detail in the following:

### a) Thermoplastic block copolymer

The inventive hot melt adhesive comprises 10 to 60 wt.-%, preferably 20 to 40 wt.-% of a thermoplastic copolymer, based on the total weight of the hot melt adhesive composition. The thermoplastic block copolymer is preferably selected from the group consisting of an A-B-A block copolymer, an (A-B) ₙ, or A-(B-A)ₙ-B-A block copolymer, wherein n is an integer of 1 or more, each A comprising a polystyrene block and each B comprising a rubbery block. The A blocks are preferably homopolymeric polystyrene. However, other vinyl arene monomers can be used in preparing either a homo or copolymeric plastic or glassy end or A block. The B blocks typically comprise rubbery polymers derived from diene monomers including isoprene and butadiene. The midblocks can be post treated to improve their heat stability through hydrogenation or other treatment, i.e. namely SEPS from hydrogenated SIS or SEBS from hydrogenated SBS. In a preferred embodiment, the thermoplastic copolymer is a styrene-isoprene-styrene copolymer (SIS) or a blend of SIS and styrene-butadiene-styrene block copolymer (SBS). In a preferred embodiment, the SIS and/or SBS block copolymers may also be hydrogenated.

In a preferred embodiment, the block copolymer is provided as a blend of polymers, the blend preferably further comprising one or more polymers selected from the group consisting of styrene-ethylene-butylene-styrene copolymer (SEBS), styrene-ethylene-propylene-styrene copolymer (SEPS), ethylene-vinyl-acetate copolymer (EVA) or copolymer and polymers derived from olefins.

In a preferred embodiment, the block copolymer is a styrene-isoprene-styrene copolymer (SIS) or a blend of SIS and styrene-butadiene-styrene block copolymer (SBS) or a blend of SIS and styrene-butadiene-styrene block copolymer (SBS) with SEBS or/and SEPS, EVA or polyolefin polymer.

In a preferred embodiment, the block copolymer is a linear SIS block copolymer, optionally comprising SBS blocks, with a styrene content of 12 to 50%, preferably 15 to 45%.

The styrene content in the inventive adhesive composition is preferably 15 to 45 wt.-%, based on the total weight of the composition. In a preferred embodiment, the content of styrene in the composition is achieved by use of a mixture of high styrene content SIS block copolymers and low styrene SIS block copolymers.

### b) Tackifier

The inventive hot melt adhesive composition comprises 30 to 70 wt.-%, preferably 40 to 65 wt.-% of a tackifier, based on the total weight of the composition.

In a preferred embodiment, the tackifier is selected from the group consisting of aliphatic, cycloaliphatic and aromatic hydrocarbon resins and hydrogenated derivatives thereof, rosins and rosin derivatives, terpenes and modified terpenes as well as mixtures thereof.

Tackifiers useful in the adhesives of the invention comprise rosin derivatives including wood rosin, tall oil, tall oil derivatives, rosin ester resins, natural and synthetic terpenes and aliphatic or mixed aromatic-aliphatic tackifying resins.

Aromatic monomers useful in forming the aliphatic-aromatic adhesive compositions of the invention can be prepared from any monomer containing substantial aromatic qualities and a polymerizable unsaturated group. Typical examples of such aromatic monomers including the styrenic monomers styrene, alphamethylstyrene, vinyl toluene, methoxystyrene, t-butylstyrene, chlorostyrene, etc., indene monomers including indene, methyl indene and others. Aliphatic monomers are typically natural and synthetic terpenes which contain C₅ and C₆ cyclohexyl or cyclopenyl saturated groups that can additionally contain a variety of substantially aliphatic ring substituents. Aliphatic tackifying resins can be made by polymerizing a feed stream containing sufficient aliphatic monomer such that the resulting resin exhibits aliphatic characteristics. Such feed streams can contain other aliphatic unsaturated monomers such as 1,3-butadiene, cis-1,3-pentadiene, trans-1,3-pentadiene, 2-methyl-1,3-butadiene, 2-methyl-2-butene, cyclopentadiene, dicyclopentadiene, terpene monomers and others. Mixed aliphatic-aromatic resins contain sufficient aromatic monomers and sufficient aliphatic monomers and optionally other C₃ -Cs unsaturated monomers to produce a resin having both aliphatic and aromatic character.

The adhesive compositions of the invention can contain rosin and rosin derivatives as a tackifying agent. Rosin is a solid material that occurs naturally in the oleo resin of pine trees and typically is derived from the oleo resinous extrudate of the living tree, from aged stumps and from tall oil produced as a by-product of kraft paper manufacture. After it is obtained, rosin can be treated by hydrogenation, dehydrogenation, polymerization, esterification and others. Rosin is typically classed as a gum rosin, a wood rosin, and as a tall oil rosin. The materials can be used unmodified and additionally can be used in the form of esters of polyhydric alcohols and can be polymerized through the inherent unsaturation of the molecules. The materials are commercially available and can be blended into the adhesive compositions using standard blending techniques.

Representative examples of such rosin derivative tackifying resins include the pentaerythritol esters of tall oil, gum rosin, wood rosin or mixtures thereof.

Representative examples of such aliphatic resins include hydrogenated synthetic C₉ resins, synthetic branched and unbranched C₅ resins and mixtures thereof.

Representative examples of such aromatic aliphatic tackifying resins include styrenated terpene resins, styrenated C₅ resins or mixtures thereof.

In an especially preferred embodiment, the tackifier resin is chosen from one or more of the following categories:
i) hydrocarbon resins with C₅ units; DCPD (dicyclopentadiene) hydrogenated resins; Cg modified DCPD hydrogenated resins; Cg-modified hydrocarbon resins with C₅ units; hydrogenated resins with C₅ units;
ii) terpene resins;
iii) partially hydrogenated C₉ type aromatic resins.

### c) Plasticizer

The hot melt adhesive composition according to the present invention is in particular distinguished by its plasticizer blend which is comprised in the composition in an amount of 2 to 40 wt.-%, preferably 5 to 30 wt.-%, based on the total weight of the composition. The plasticizer blend comprises a first plasticizer P1 which is solid at room temperature and a second plasticizer P2 which is liquid at room temperature. Without being bound by theory, it is believed that the plasticizer blend applied in the inventive hot melt adhesive results in the favorable combination of long open time and high bond strength observed in connection with the inventive hot melt adhesive composition.

In a preferred embodiment, the first plasticizer P1 compound with a melting point of at least 60 °C, preferably at least 80 °C. In a further preferred embodiment, the plasticizer P1 is a benzoate plasticizer comprising a cycloaliphatic or aromatic ester of a benzene dicarboxylic acid or a cycloaliphatic polyester of aromatic carboxylic acids, which is a solid at room temperature. In an especially preferred embodiment, the plasticizer P1 is 1,4-cyclohexane dimethanol benzoate.

In a preferred embodiment, the amount of the first plasticizer P1 in the adhesive composition is preferably no more than 20 wt.-%, based on the total weight of the adhesive composition. It was surprisingly found that limiting the amount of the first plasticizer P1 to be within the claimed ranges further improved the performance of the adhesive composition.

The plasticizer blend further comprises a second plasticizer P2 which is liquid at room temperature. In preferred embodiment, the plasticizer P2 is comprised in the adhesive composition in an amount of 0.1 to 10 wt.-%, preferably 0.5 to 7 wt.-%, based on the total weight of the adhesive composition.

The liquid plasticizer P2 is preferably selected from naphthenic mineral oil and/or paraffinic mineral oil.

The hot melt adhesive composition of the present invention may comprise further components such as stabilizers and antioxidants. In a preferred embodiment, the amount of further components in the composition is not more than amount of 0.3 to 1 wt.-%, based on the total weight of the composition.

Suitable antioxidants are, for example, hindered phenols, sulfur-based antioxidants and phosphorus-based antioxidants.

The hot melt adhesive composition possesses a number of favorable properties such as long open time and strong adhesion. In a preferred embodiment, the inventive composition is characterized by at least one of the following properties:
i) an open time of 30 to 180 seconds;
ii) a temperature resistance range of -20 to 50 °C;
iii) fiber tearing at high and slow peel speed;

The adhesive composition according to the invention shows a surprisingly long open time, a wider operation window as well as strong adhesion to dense paper, making it especially suitable for paper packaging. A further object of the present invention is therefore the use of a hot melt adhesive composition according to the invention in paper packaging, preferably in automated paper packaging lines.

Due to the increased adhesion, paper packaging sealed with the hot melt adhesive composition according to the invention cannot be resealed which is especially useful in secure paper packaging.

Therefore, the hot melt adhesive composition of the present invention is preferably used in the production of secure paper packaging.

A further object of the present invention is an article comprising at least two layers adhered to each other with a hot melt adhesive composition according to the present invention. Preferably, at least one of these layers comprises cellulose fibers. In an especially preferred embodiment, the article is selected from the group consisting of sealable paper bags, especially those that hold up to 2 kg of weight, and secure paper packages.

The present invention will be explained in more detail with reference to the following examples which by no means are to be understood as limiting the scope and spirit of the present invention.

### Examples:

Table 1 shows the composition of 2 inventive adhesive compositions according to the inventions:

**Table 1:**

| | Function | Example 1 | Example 2 |
|---|---|---|---|
| Mineral oil | Plasticizer P2 | 4 | 3 |
| 1,4-cyclohexane dimethanol benzoate | Plasticizer P1 | 10 | 25 |
| phosphite antioxidant | Antioxidant | 0.5 | 0.5 |
| triblock SIS block copolymer; styrene content: 30% | Block copolymer | 25 | 26 |
| fully hydrogenated hydrocarbon resin | Tackifier | 24 | 21.5 |
| partially hydrogenated hydrocarbon resin | Tackifier | 36.5 | 24 |
| total | | 100 | 100 |

The hot melt adhesive compositions were tested in various applications and their performance compared to common hot melt adhesive. Technomelt EM 725 and Technomelt PS 5609 N of Henkel AG & Co. KGaA were used for comparison.

### 1. Dynamic peel test

One 100mm wide paper strip was coated with 18mm wide stripe hot melt coating and the hot melt adhesive coating weight was 100gsm. Then bonded the second 100mm wide paper stripe with open time of 60s, 120s or other specified time by pressing the second paper stripe with 2kg roller to form bonding. Cut 25mm wide bonded paper stripes by cross direction. Samples were peeled using different velocities. In cases of the inventive composition, the desired fiber tear was observed. The results are summarized in table 2.

**Table 2a: Standard dense envelope paper 120 g/m²; 60s opening time**

| Example | 50 mm/min | |
|---|---|---|
| | peel peak [N] | failure mode |
| Technomelt EM 725 | 16 | cohesive/adhesive failure |
| Technomelt PS 5609N | 33 | adhesive failure |
| Example 1 | 35 | all fiber tearing |
| Example 2 | 24 | adhesive failure with slight fiber tearing |

**Table 2b: Standard dense envelope paper 120 g/m²; 120s opening time**

| Example | 50 mm/min | |
|---|---|---|
| | peel peak [N] | failure mode |
| Technomelt EM 725 | n.d. | - |
| Technomelt PS 5609N | n.d. | - |
| Example 1 | 25 | all fiber tearing |
| Example 2 | No value | Open time is too short and not enough bond to form |

**Table 2c: Standard dense envelope paper 120 g/m²; 60s opening time**

| Example | 500 mm/min | |
|---|---|---|
| | peel peak [N] | failure mode |
| Technomelt EM 725 | 24 | cohesive failure |
| Technomelt PS 5609N | 35 | adhesive failure |
| Example 1 | 22 | all fiber tearing |
| Example 2 | 20 | fiber tearing with adhesive failure |

**Table 2d: Standard dense envelope paper 120 g/m²; 120s opening time**

| Example | 500 mm/min | |
|---|---|---|
| | peel peak [N] | failure mode |
| Technomelt EM 725 | n.d. | - |
| Technomelt PS 5609N | n.d. | - |
| Example 1 | 28 | all fiber tearing |
| Example 2 | No value | Open time is too short and |
| | | not enough bond to form |

### 2. Static peel test

One 100mm wide paper strip was coated with 18mm wide stripe hot melt coating and the hot melt adhesive coating weight was 100gsm. Then bonded the second 100mm wide paper stripe with open time of 60s, 120s or other specified time by pressing the second paper stripe with 2kg roller to form bonding. Cut 25mm wide bonded paper stripes by cross direction. Hang one end to a rig in oven and put a weight of 100 g to the other end in a 180° peel mood. The static peel test was carried out in an environment at a temperature of 45 °C and the time [hours] noted that it took for weight to drop, indication debonding of the paper strips. The results are summarized in table 3 using Standard dense envelope paper 120 g/m² and show a significant improved adhesion of the inventive composition.

**Table 3:**

| | opening time 60s | opening time 120s | failure mode |
|---|---|---|---|
| Technomelt EM 725 | 2 hours | 1,7 hours | cohesive failure |
| Technomelt PS 5609N | 3 hours | 2,2 hours | adhesive failure |
| Example 1 | 64 hours | 64 hours | cohesive failure |
| Example 2 | 4 hours | Too short opentime, not sufficient bonding and quick weight drop | cohesive failure |

## Claims

1. Hot melt adhesive composition comprising, based on the total weight of the composition:
a) 10 to 60 wt.-% of a thermoplastic block copolymer,
b) 30 to 70 wt.-% of a tackifier; and
c) 2 to 40 wt.-% of a plasticizer blend,
**characterized in that** the plasticizer blend comprises a first solid plasticizer P1 and a second liquid plasticizer P2.

2. The hot melt adhesive composition according to claim 1, **characterized in that** the thermoplastic block copolymer is selected from the group consisting of an A-B-A block copolymer, an (A-B) ₙ, or A-(B-A)ₙ-B-A block copolymer, wherein n is an integer of 1 or more, each A comprising a polystyrene block and each B comprising a rubbery block.

3. The hot melt adhesive composition according to any of the forgoing claims, **characterized in that** the thermoplastic copolymer is a styrene-isoprene-styrene copolymer (SIS) or a blend of SIS and styrene-butadiene-styrene block copolymer (SBS) or a blend of SIS and styrene-butadiene-styrene block copolymer (SBS) with SEBS or/and SEPS, EVA or polyolefin polymer.....

4. The hot melt adhesive composition according to any of the forgoing claims, **characterized in that** the tackifier is selected from the group consisting of aliphatic, cycloaliphatic and aromatic hydrocarbon resins and hydrogenated derivatives thereof, rosins and rosin derivatives, terpenes and modified terpenes as well as mixtures thereof

5. The hot melt adhesive composition according to claim 4, **characterized in that** the tackifier resin is chosen from one or more of the following categories:
i) hydrocarbon resins with C₅ units; DCPD (dicyclopentadiene) hydrogenated resins; Cg modified DCPD hydrogenated resins; Cg-modified hydrocarbon resins with C₅ units; hydrogenated resins with C₅ units;
ii) terpene resins;
iii) partially hydrogenated C₉ type aromatic resins.

6. Hot melt adhesive composition according to any of the forgoing claims, **characterized in that** the first plasticizer P1 is a benzoate plasticizer comprising a cycloaliphatic or aromatic ester of a benzene dicarboxylic acid or a cycloaliphatic polyester of aromatic carboxylic acids, which is a solid at room temperature.

7. Hot melt adhesive composition according to claim 6, **characterized in that** the plasticizer P1 is 1,4-cyclohexane dimethanol benzoate.

8. Hot melt adhesive composition according to any of the forgoing claims, **characterized in that** the plasticizer P2 is comprised in the adhesive composition in an amount of 0.1 to 10 wt.-%, preferably 0.5 to 7 wt.-%, based on the total weight of the adhesive composition.

9. Hot melt adhesive composition according to any of the forgoing claims, **characterized in that** the liquid plasticizer P2 is selected from naphthenic oil and/or paraffinic oil.

10. Hot melt adhesive composition according to any of the forgoing claims, **characterized in that** composition is **characterized by** at least one of the following properties:
i) an open time of 30 to 180 seconds;
ii) a temperature resistance range of -20 to 50 °C;

11. Use of a hot melt adhesive composition according to any of claims 1 to 10 in paper packaging, preferably in automated paper packaging lines.

12. Use according to claim 11 in the production of secure paper packaging.

13. Article comprising at least two layers adhered to each other with a hot melt adhesive composition according to any of claims 1 to 10.

14. Article according to claim 13, **characterized in that** at least one of these layers comprises cellulose fibers.

15. Article according to any of claims 13 or 14, **characterized in that** the article is selected from the group consisting of sealable paper bags, especially those that hold up to 2 kg of weight, and secure paper packages.
